Europäisches Patentamt

European Patent Office

Office européen des brevets

(19)

(11) Publication number: 0 088 055
A1

# (12) EUROPEAN PATENT APPLICATION

(21) Application number: 83830045.7

(22) Date of filing: 02.03.83

(51) Int. Cl.³: F 24 D 17/00

(30) Priority: 03.03.82 IT 6723682

(43) Date of publication of application:
07.09.83 Bulletin 83/36

(84) Designated Contracting States:
DE FR GB IT NL SE

(71) Applicant: INDESIT INDUSTRIA ELETTRODOMESTICI
ITALIANA S.p.A.
Str. Piossasco Km 17
I-10040 Rivalta Turin(IT)

(72) Inventor: Defilippi, Aldo
Via Filangieri 8
I-10128 Torino(IT)

(72) Inventor: Siciliano di Rende, Giovanni
Viale Lincoln 120
I-81100 Caserta(IT)

(72) Inventor: Alluto, Luigi
Strada Santa Brigida 37/4
I-10024 Moncalieri (Torino)(IT)

(74) Representative: Saconney, Piero et al,
c/o Jacobacci-Casetta & Perani S.p.A. Via Alfieri, 17
I-10121 Torino(IT)

(54) Device for recovering heat from domestic water.

(57) The present invention relates to a heat pump device for recovering heat from domestic water, comprising a tank (1) for storing hot and/or cold drain water. The evaporating capacity of the evaporator (8) and the ratio between the volume of the water storage tank and that of the cistern (12) of the water heater are such as to provide for efficient heat recovery even from relatively cold water, such as that supplied from the water mains. Furthermore, the device comprises means for starting up the heat pump compressor (11) automatically when the water in the storage tank is above a given minimum temperature, for stopping it when the temperature of the water in the cistern reaches a given maximum temperature and for emptying the storage tank when the drain water in the cistern falls below the said minimum temperature or when hot drain water is fed into the storage tank, even if the temperature of the said water has not fallen to the said minimum.

./...

EP 0 088 055 A1

FIG. 1

0088055

- 1 -

"Device for recovering heat from domestic water"

Means are also provided for ensuring only drain water with a temperature higher than the water already in the storage tank is fed into it, as well as means enabling the storage tank to be cleaned periodically.

The present invention relates to a device for recovering heat from domestic water, comprising a compressor for compressing refrigerating fluid, a condenser for condensing the refrigerating fluid from the compressor, an expander for expanding the refrigerating fluid from the condenser and evaporating means for evaporating the refrigerating fluid from the expander.

In recent times, an increasing need has been felt for saving energy, including that which has up to now always been wasted. It is a well known fact that one of the major sources of waste is the heat contained in hot water drained from household appliances and the heat generated by the said appliances during operation.

The energy consumed by household heating appliances in particular (immersion heaters, dishwashers, washing machines, stoves, etc.) amounts to about 50% of total consumption, almost all of which is currently being wasted.

Household appliances, however, are faced with three major problems:
- how to reduce energy consumption (electricity and fuel);
- how to reduce water heating time on appliances such as washing-machines or dish-washers (by reducing

- 2 -

the wash cycle);

-  how to incentivate nighttime consumption of electricity by charging lower rates and so reduce peak-hour demand.

Various systems have already been devised for recovering the heat contained in drain water, e.g. heat exchangers and heat-pump systems. As no storage tank is provided for, however, the said heat exchangers only recover heat when the water is actually drained off.

Heat-pump systems are available for recovering the heat contained in domestic drain water but these are fairly complex and only designed for groups of flats installations. For example, in the document FR-A - 2 312 735 a plant is described for recovering heat from domestic drain waters, suitable for use in a whole building, furnished with a unique centralized hydraulic main for the drainage of the waste water and a unique centralized main for the supply to the different users of hot water heated by the described plant. Consequently the object of FR-A - 2 312 735 is unsuitable for installation in a flat room like the kitchen or the bathroom since it is conceived to be used in centralized mains and, should it be installed in a flat room, it would require several structural modifications to the hydraulic plant of the house, not to mention its unsuitable dimensions and the capacity of heat recovery it offers. Others entail major alterations to existing household appliances and are so complex as to jeopardize working efficiency. The proposals indicating the possibility of recovering heat supplied by the condenser of a refrigerator and/or a freezer to heat the water for sanitary use are cited as an example. These solutions, though, cause the functioning of the refrigerator to be very difficult and critical which does not work any more at its best because of the sudden variations in temperature that are produced in the medium in which the condenser of the refrigerating circuit is immersed. It must be remembered that the sizing of the refrigerating circuit is strictly connected to the capacity of heat exchange of the condenser, that when immersed in air (that has a low heat conductivity) does not suffer much from the variations in temperature in the medium in which is immersed; but when immersed in water (that has higher heat conductivity) it suffers much from the variations in temperature of the water around it: cold when piped in and hot at the end of the heating process. These drawbacks result in their being used on a very small scale. On a cost-advantage basis, in fact, they only provide for saving over a very long period of time - much longer than the expected troublefree running period. Consequently, these systems are rarely used and may as well not have been invented.

The aim of the present invention is to overcome these drawbacks by providing a heat-pump device for recovering the heat contained in hot and/or cold drain water which provides for reducing the total amount of energy required for heating the water, for shifting energy consumption to cheaper rate times, for reducing the wash cycle time of appliances such as washing-

- 4 -

machines and dish-washers, and which can be used on appliances currently sold on the market. Further aims of the present invention are to ensure that the said device is simple, reliable and cheap.

With these aims in view, the present invention relates to a device for recovering heat from domestic water, comprising a compressor for compressing refrigerating fluid, a condenser for condensing the refrigerating fluid from the compressor, an expander for expanding the refrigerating fluid from the condenser and evaporating means for evaporating the refrigerating fluid from the expander, characterised by the fact that the said condenser is fitted inside a cistern filled with the water to be heated and by the fact that the said evaporator is fitted inside a storage tank fed with domestic water and in which the said water is kept long enough for it to yield enough heat to fall below a given minimum temperature.

The invention will now be described with reference to the attached drawings, provided by way of a non-limiting example, in which:

- Fig. 1 shows a working diagram of a preferred arrangement of the present invention;

- Fig. 2 shows a first working arrangement of the preferred Fig. 1 set-up of the present invention;

- Fig. 3 shows a second working arrangement of the preferred Fig. 1 set-up;

- Fig. 4 shows a part diagram of a second preferred arrangement of the present invention;

- Fig. 5 shows the electric diagram of an electronic circuit for controlling the operating cycle of the device in the preferred Fig. 4 arrangement.

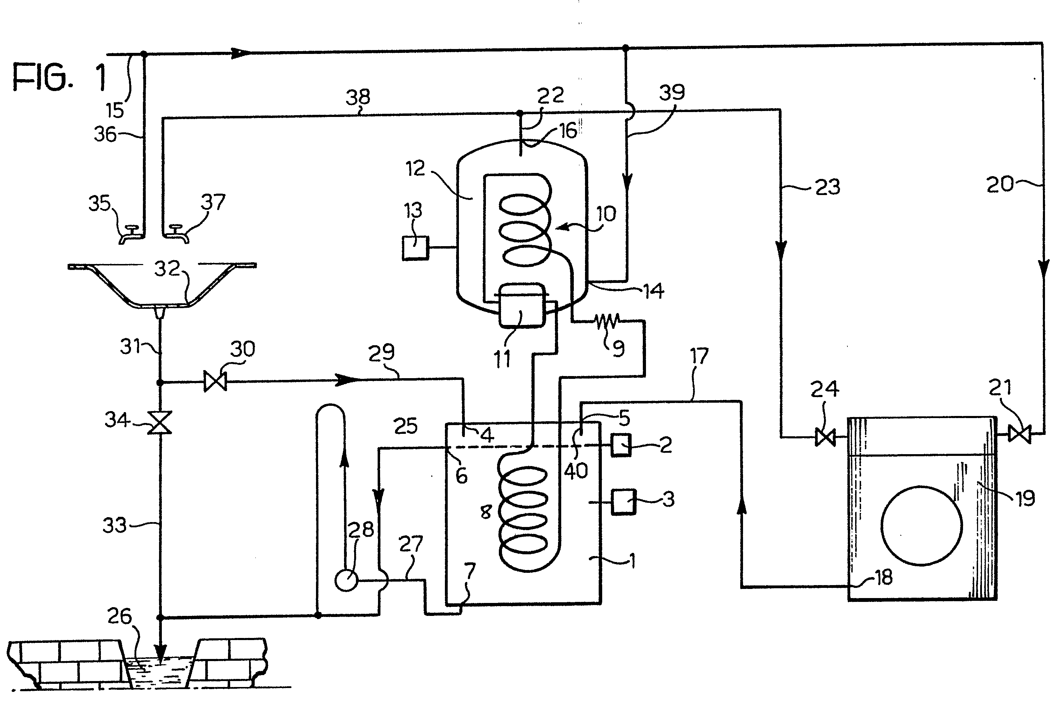

Fig. 1 shows a water storage tank 1 of roughly 80-100 litre capacity with a level indicator 2, a first thermostat 3, two drain water inlets 4,5, an overflow 6 and outlet 7. Storage tank 1 is fitted inside with an evaporator 8 for a heat-pump circuit which also comprises a capillary tube 9, condenser 10 and compressor 11.

The capacity of evaporator 8 is such as to extract enough heat from the drain water to bring it down to a temperature of 4-6°C and therefore requires no defrosting device. Condenser 10 is fitted inside cistern of a water heater 12 which has a second thermostat 13, an inlet 14 for cold water from the mains 15 and a hot water outlet 16. Compressor 11 is placed in thermal contact with the walls and the water in cistern of the water heater 12 so as to yield the heat generated during operation to the cistern. Pipe 17 connects the drain 18 of a dish- or clothes-washing-machine 19 to inlet 5 on storage tank 1, while pipe 40 inside the said storage tank 1 feeds the said drain water into the bottom part of storage tank 1.

The said dish- or clothes-washing-machine 19 is supplied with cold water from the mains 15 through pipe 20 and electrovalve 21 and with hot water from cistern 12 through a first pipe 22, a second pipe 23 and a second electrovalve 24. Pipe 25 connects overflow 6 on storage tank 1 to the main system drain 26, while another pipe 27 connects drain 7 on storage tank 1 to main system drain 26 via pump 28. Pipe 29 forms a by-pass through valve 30 to feed water from drain 31 in sink 32 to inlet 4 on storage tank 1, while a second pipe 33 forms a second by-pass through a second valve 34 to feed water from drain 31 in sink 32 to main drain 26. Obviously, when one by-pass is open, the other is closed. Sink 32 is supplied with water from a cold water tap 35 connected to the mains 15 via pipe 36 and by a hot-water tap 37 connected to drain 16 on cistern of the water heater 12 by pipes 38 and 22. Cold water is also supplied to cistern 12 from the mains 15 by pipe 39 and inlet 14 on cistern 12 itself.

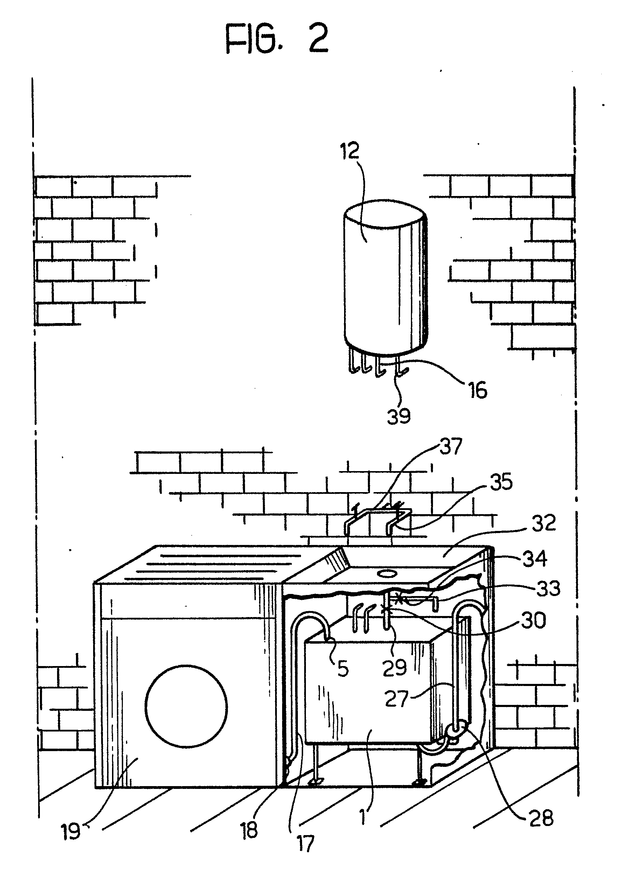

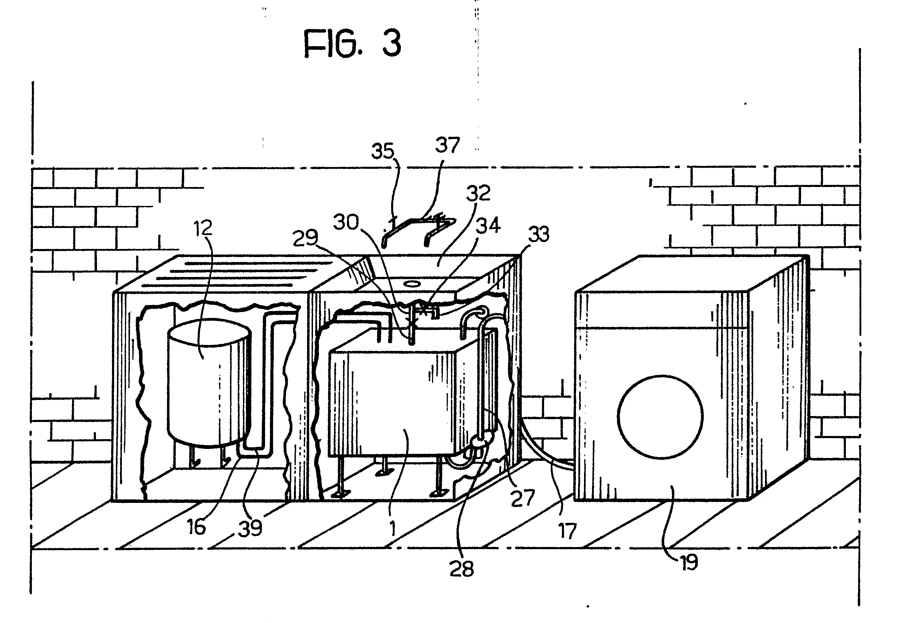

Figs. 2 and 3 show two different working arrangements of the device for recovering heat from drain water. The parts common to Fig. 1 are numbered in the same way.

Fig. 2 shows a "traditional" arrangement with the dish- or clothes-washing-machine 19 fitted under the draining board of sink 32 with storage tank 1 fitted under the sink drain. Water heater 12 is wall mounted and supplies hot water to both dish- or clothes-washing-machine 19 and tap 37 through pipe 16.

The Fig. 3 arrangement can be used anywhere there is a tap with no need for making holes or running pipes through the wall. Water heater 12 is fitted under the draining board of sink 32 with storage tank 1 under the sink drain and dish- or clothes-washing-machine 19 to the side of the sink.

To explain how this first preferred arrangement of the heat recovering device covered by the present invention works, we shall start with by-pass 29-30 open and by-pass 33-34 closed (normal situation in which water is drained from sink 32 into storage tank 1).

As already mentioned, storage tank 1 is also supplied with drain water from dish- or clothes-washing-machine 19. The duty cycle of storage tank 1 is as follows:

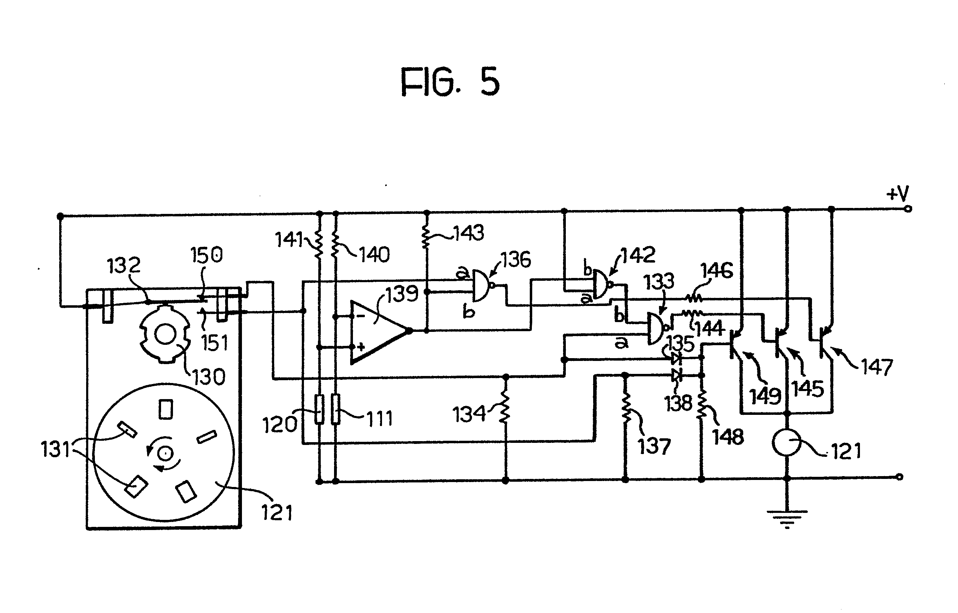

Compressor 11, and consequently also the heat pump, run as long as the temperature of the water inside storage tank 1 is over 4-6°C. When running, the heat pump takes heat from the water in storage tank 1 and supplies it to the water in cistern of the water heater 12. When the temperature of the water in storage tank 1 falls to 4-6°C, thermostat 3 stops compressor 11 and activates pump 28 which empties storage tank 1. The minimum temperature is set so low to enable heat to be extracted from "cold" water as well, i.e. from mains 15, which is usually over 6°C and so ensure the device is exploited fully. However, if hotter drain water is received (even if the water in storage tank 1 has not reached 4-6°C), pump 28 is started up just the same and empties storage tank 1 so that it can be filled with the said hot drain water. This is made possible by a "differential" thermostat (described in detail in Fig. 5) consisting of an electronic circuit which measures the temperature difference between the in-coming drain water and the water already in storage tank 1. When the in-coming water is hotter than the water in storage tank 1, it activates pump 28. In a simpler solution, pump 28 may be activated by the timer on dish- or clothes-washing-machine 19 so that, when water is fed in, it activates pump 28 to empty storage tank 1 which will soon be replenished again with hot drain water. When the water in cistern 12 reaches the required temperature, thermostat 13 stops compressor 11 on the heat pump. The high capacity of storage tank 1 and the above operating mode provide for maximum exploitation of the heat recovery device.

In fact, when hot drain water is fed in, storage tank 1 is emptied so it can be filled with hotter water than it already contains and so enable more heat to be recovered. If hot drain water fails to be supplied for a long period of time, the system keeps running by recovering heat from "cold" water. What is more, the position of compressor 11, in thermal contact with cistern 12 and the water inside, ensures the operating heat generated by compressor 11 is supplied to the water inside cistern 12 so as to heat it. Dish- or clothes-washing-machine 19 can run on either cold water from mains 15 or hot water from cistern 12, thus reducing both consumption and wash cycle time. Electrovalves 21 and 24 for tapping hot or cold water are activated by the timer on dish- or clothes-washing-machine 19. Should users not wish to operate a more complex machine than those currently available on the market, the heat recovery device may be used just the same for kitchen purposes or standard dish- and clothes-washing-machines by feeding hot water from cistern 12 into the single inlet. In this way, all the wash stages (including rinsing) are performed using hot water which, though involving slightly higher consumption, provides for a more efficient wash.

Various alterations may be made to the heat recovery device described which consist in fitting cistern 12 with an electric heating resistor, located halfway up the cistern, a manual switch and an extra thermostat; in fitting storage tank 1 with two pressure switches, one for maximum and one for minimum pressure, and in extending pipe 40 into an "L" shape so that drain water is fed into the bottom centre section of storage tank 1.

The changes to the operating cycle already described are as follows:

When hot drain water is fed in from dish- or clothes-washing-machine 19, by means of suitable settings on the two pressure switches, storage tank 1 is not emptied completely, but only by the same amount of water (about 25-30 litres) that is fed in (this is the usual amount of water drained off after a dish- or clothes-washing-machine cycle). As the water in storage tank 1 is arranged in "layers", that is, cold at the bottom and hot at the top, drain 7 has been located at the bottom. A partial drain-off only dumps the colder water from storage tank 1 so that further heat may be recovered from the remaining (hotter) water. The advantage of a partial drain-off is that colder water is "replaced" by hot drain water which provides for improving the efficiency of the heat recovery device even further. "L" shaped pipe 40 provides for no need of emptying storage tank 1, even partially, when hot drain water is fed in from dish- or clothes-washing-machine 19. The way this is achieved is by means of the drain pump on the said dish- or clothes-washing-machine 19 which pumps in the said hot drain water under pressure so as to push the colder water at the bottom of storage tank 1 upwards and out through overflow 25. Further advantages of this solution are that the said hot drain water is pumped over evaporator 8 so as to improve heat exchange between evaporator 8 and the said drain water and that it provides for eliminating any grease floating on the surface of the drain water in storage tank 1 which is the first to flow out of overflow 25. If the heat recovery device has been de-activated, the electric resistor halfway up cistern 12, which is activated by means of a manual switch, provides for heating the water quickly (roughly 1 hour) after the device is switched on again. The reason hot water can be obtained so quickly is that only half of the water in cistern 12 is heated. After this first stage, the additional thermostat disconnects the electric resistor and starts the heat recovery cycle which heats all the water in cistern 12. If, for any reason, the said heat recovery device needs to be disconnected, all that need be done is to shut off by-pass pipe 29-30, open by-pass pipe 33-34 and drain water from dish- or clothes-washing-machine 19 into sink 32.

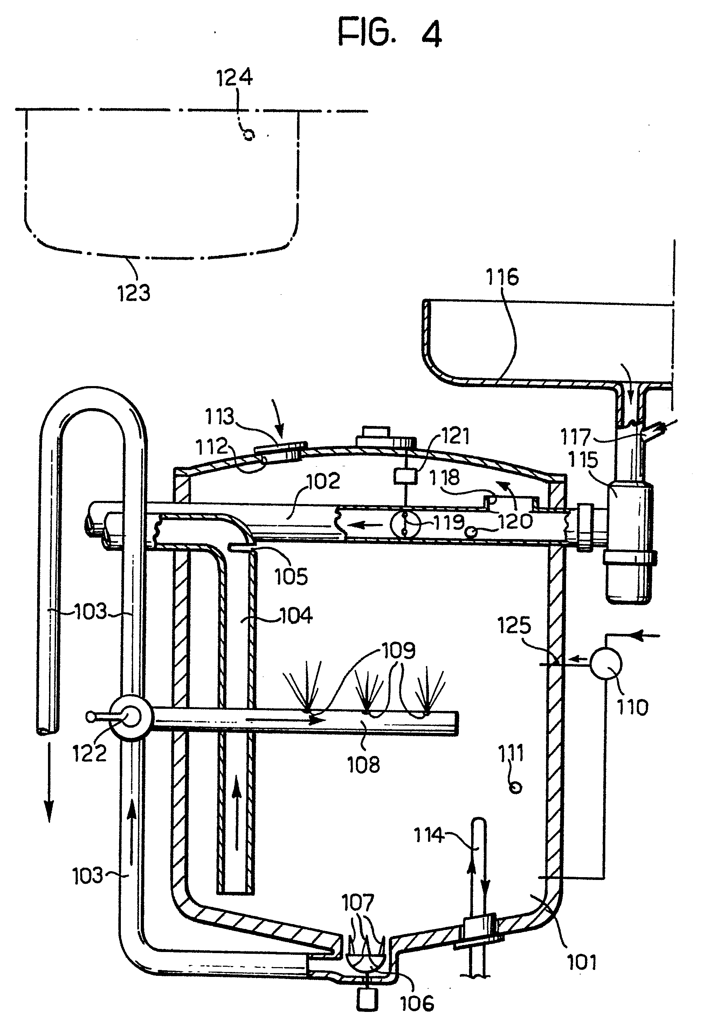

Fig. 4 shows a storage tank 101 with a pipe 102 running across the top which also acts as an inlet pipe; a first outlet pipe 103 running up from the bottom of storage tank 1; a second outlet pipe 104 which also sucks up water from the bottom of the said tank and has a slot 105 on top which acts as an overflow; a pump 106, at the bottom of storage tank 101 near the inlet of outlet pipe 103, which is fitted with refuse mincing blades 107; a pipe 108 closed at the end terminating inside storage tank 101 and fitted with spray nozzles 109; a pressure switch 110 which detects the pressure between the top and bottom of storage tank 101; a temperature sensor 111; a hole for detergent 112, normally closed by cap 113, and part of a refrigerator condenser 114 the other part of which (not shown in the diagram) is exposed to the air. One end of pipe 102 is connected to syphon 115 on sink 116 which also has an inlet 117 for drain water from dish- or clothes-washing-machine not shown in the diagram. The other end of pipe 102 joins up with the main drain on the device (not shown in the diagram either). Pipe 102 has a hole 118 which connects it to storage tank 101 and is fitted with a gate valve 119 controlled by electric motor 121 the shaft of which is fitted with a cam wheel (not shown in the diagram) and temperature sensor 120. Electric motor 121 has a 20 Kg/cm torque, can turn both ways and is controlled by an electric circuit shown in Fig. 5 for opening and closing gate valve 119. As the said opening and closing mechanism is fitted inside storage tank 101, it need not be perfectly airtight in that any leakage is collected in the said storage tank 101. Pipe 108 is connected via tap 122 to drain pipe 103. Part 114 of the refrigerator condenser gives off heat to the water in storage tank 101. The size of the said condenser section poses various problems which have already been dealt with in Italian Patent Application No. 67288-A/81 of March 3rd, 1981, filed by the present applicant. The ends of drain pipes 103 and 104 not connected to storage tank 101 terminate in the main drain on the device.

Fig. 4 also shows a cistern of the water heater 123 with a thermostat 124 whereas it does not show the heat pump with an evaporator inside storage tank 101 and a condenser inside cistern 123. As storage tank 101 is usually filled with medium-to-low temperature water, only light lagging is required.

To explain how the device shown in Fig. 4 works, we shall start with gate valve 119 in the closed position. If pipe 102 feeds in drain water (the temperature of which is detected by sensor 120) hotter than the water already inside storage tank 101 (the temperature of which is detected by sensor 111), gate valve 119 remains closed and the said drain water flows into storage tank 101 through hole 118 on pipe 102. At the same time, the water at the bottom of storage tank 101 (the colder layer) is drained off through pipe 104 into the main drain on the device, while part of the surface water with any grease and/or oil floating on the top is drained off into the main drain through calibrated slot 105 on pipe 104. The colder layer of water in storage tank 101 is thus replaced with hotter drain water and any grease and/or oil is removed. If the in-coming drain water is colder than the water already inside storage tank 101, gate valve 119 opens and the said drain water by-passes storage tank 101 to flow into the main drain. If gate valve 119 had been open in the first instance, it would have closed and would have remained open in the second. How this is made possible will be described when we come to operation of the circuit shown in Fig. 5. Storage tank 101 remains full as long as the temperature of the water inside is over 5°C. When it falls below temperature, pump 106 is started up to empty storage tank 101 through drain pipe 105. Tap 122 is normally open (as in this case). At the same time, pump 106 chops up any solid refuse at the bottom of storage tank 101 by means of blades 107 so as to empty it more easily. At this point, water is sucked up from the mains (usually over 5°C) by means of pressure switch 110 and the storage tank is filled up again.

Should the temperature of the mains water, for any reason, fall below or close to 5°C, to prevent this from being sent into circulation, a variation also provides for a thermostat on the mains inlet pipe which only allows water to flow in from the mains at a specific temperature. This operating arrangement also provides for recovering heat from the mains alone so that, even if hot drain water is not supplied for a long period of time, cistern of the water heater 123 contains usable hot water just same. The heat pump is turned on and off by thermostat 124 on cistern 123 and stays on as long as the temperature of the water in cistern 123 remains below 45°C and goes off when this temperature is exceeded. The heat pump and storage tank filling and emptying cycles are independent in that storage tank 101 is practically always full of water over 5°C whereas the heat pump comes on or goes off when the temperature of the water in cistern 123 is below or over 45°C.

A variation may provide for the heat recovery device to operate so that, when the temperature of the water in storage tank 101 exceeds 30°C, the maximum temperature of the water in cistern 123 is raised to 52°C and the heat pump is only stopped if this new maximum is exceeded or if the temperature of the water in storage tank 101 falls below 25°C.

This is guaranteed by thermostat 124, temperature sensor 111 and an electronic circuit which is so simple it needs no explanation.

As dirty water inevitably settles in storage tank 101 and dirt may cling to the evaporator on the heat pump thus affecting heat exchange efficiency between the said evaporator and the drain water, a device is provided for cleaning storage tank 101 which consists of a hole 112 for detergent, a pipe 108 with spray nozzles 109, a tap 122, a push-button (not shown in the diagram) for activating pump 106. To clean tank 101, tap 122 is turned off, detergent is poured in and pump 106 started up. In this way, the water in storage tank 101 is forced by pump 106 into pipe 108 and sprayed over the walls of storage tank 101 and the heat pump evaporator so as to clean them. This is a manual operation that can be performed whenever needed.

Fig. 5 shows the electronic circuit controlling operation of the heat recovery device as shown in the Fig. 4 solution. It consists of a cam wheel, 130, integral with the shaft on electric motor 121 (poles marked 131) and with gate valve 119, which controls a two-position blade switch 132 whose middle contact is connected to a +V positive supply. The side terminal 150 is connected to input "a" of NAND gate 133, to one end of resistor 134, whose other end is grounded, and to the anode of diode 135. Side terminal 151 is connected to input "a" of NAND gate 136, to one end of resistor 137, whose other end is grounded, and to the anode of diode 138. One terminal of temperature sensor 111 is grounded while the other terminal is connected to the non-inverting input of threshold comparator 139 and to one end of resistor 140, the other end of which is connected to a +V supply. One terminal of temperature sensor 120 is grounded while the other terminal is connected to the inverting input of threshold comparator 139 and to one end of resistor 141, the other end of which is also connected to a +V supply. The output of threshold comparator 139 is connected to input "b" of NAND gate 136, to input "b" of NAND gate 142 and to one end of resistor 143, the other end of which is connected to a +V supply. Input "a" of NAND gate 142 is connected to the +V supply and its output to input "b" of NAND gate 133. The output of NAND gate 133 is connected to the base of PNP transistor 145 via resistor 144. The emitter of transistor 145 is connected to the +V supply while the collector is connected to a terminal on electric motor 121, the other terminal of which is grounded. The output of NAND gate 136 is connected to the base of PNP transistor 147 via resistor 146. The emitter of transistor 147 is connected to the +V supply while the collector is connected to the ungrounded terminal on electric motor 121. The cathodes of diodes 135 and 138 are connected together and to one end of resistor 148 the other end of which is grounded and connected to the base of PNP transistor 149. The emitter of transistor 149 is connected to the +V supply while the collector is connected to the ungrounded terminal on electric motor 121.

The circuit shown in Fig. 5 operates as follows:

When the temperature of in-coming drain water (detected by sensor 120) is higher than that of the water in storage tank 101 (detected by sensor 111), the output of threshold comparator 139 will be logic 1 which is transmitted to input "b" of NAND gates 136 and 142. If gate valve 119 is closed, cam wheel 130 keeps terminal 150 on switch 132 connected to the +V supply (as shown in Fig. 5) so that input "a" of NAND gate 136 is logic 0, input "a" of NAND gate 133 is logic 1 and diode 135 logic 1. In such a condition, the output of NAND gate 136 will be high and the output of NAND gate 142 low. But, as the output of NAND gate 133 is also high, all three transistors, 145, 147 and 149, are disabled, motor 121 remains off and gate valve 119 closed so that drain water can flow into storage tank 101 through hole 118.

If, on the other hand, gate valve 119 had been open, cam wheel 130 would have turned 90° and contact 151 on switch 132 would have been connected to the +V supply. In such a condition, input "a" of NAND gate 136 is logic 1 and, as input "b" of the same NAND gate 136 is also logic 1 (sent by threshold comparator 139), its output is low, transistor 147 starts conducting and motor 121 starts up to turn gate valve 119 and cam wheel 130. When the centre contact on switch 132 turns to disconnect contact 151 from the +V supply, input "a" of NAND gate 136 is no longer logic 1 but logic 0 which disables transistor 147. Both diodes 135 and 138, however, are now sent a logic 0 which starts transistor 149 conducting while motor 121 continues running.

When, as it continues moving round, cam wheel 130 pushes the centre contact on switch 132 against contact 150, the condition described at the outset is restored, motor 121 stops and gate valve 119 closes. If in-coming drain water is colder than the water in storage tank 101, the output of threshold comparator 139 is low so that inputs "b" of NAND gates 136 and 133 are logic 1. If gate valve 119 is closed (contact 150 on switch 132 connected to the +V supply), input "a" of NAND gate 136 will be logic 0, its output will be high and transistor 147 disabled.

The output of NAND gate 142 and also inputs "b" and "a" of NAND gate 133 will be high so that the latter's output will be low, transistor 145 will start conducting and motor 121 will start running. When neither contact 150 nor 151 on switch 132 is connected to the +V supply, transistor 149, via diodes 135 and 138, provides for supplying motor 121 which only stops when the centre contact on switch 132 connects contact 151 to the +V supply, that is, when gate valve 119 is open.

In much the same way, provision can be made so that, if gate valve 119 had been open, motor 121 would not have started up and gate valve 119 would have remained open.

We may sum up by saying that, when one of the side contacts (150, 151) on switch 132 is connected to the +V supply, the present device has only four stable positions in which gate valve 119 is open or closed. In all the other intermediate positions, transistor 145 and diodes 135 and 138 always provide for keeping motor 121 and gate valve 119 running until a stable balanced position is found.

To conclude, the circuit described ensures gate valve 119 is always closed or open when in-coming drain water is hotter or colder respectively than the water in storage tank 101.

An interesting point to note is that, in both solutions, heat is recovered in a "continuous cycle", that is, the same heat is recovered several times. Therefore, if it was not for losses on the system, the required amount of water could be kept permanently hot, the only consumption being that of the heat pump on the compressor.

Further alterations can be made to the heat recovery device covered by the present invention. For example, a dish- and clothes-washing-machine could be connected parallel so as to collect drain water from both. Another could be to empty the storage tank (1, 101) every 2-3 days, regardless of its operating cycles, so as to prevent dirt from collecting inside. Another could be to fit the compressor with a timer which only starts it up at specific times, e.g. at night, so as to benefit from special electricity rates where these exist. Another could be to sink the compressor inside the cistern of the water heater the only precaution being to arrange the terminal board at the bottom. This would provide for improving thermal exchange between the compressor and the water in the cistern. In fact, the latter would contribute to cooling and improving operation of the compressor.

To show just how much can be saved using the present invention, the following are the results obtained on working prototypes.

Tests were run using a dish-washing-machine capable of washing 30 plates, equivalent to 15.9 Kg, and 80-litre cistern and the heat recovery device described above with an 80-litre storage tank.

Testing commenced with cistern 12 full of water at 56°C and storage tank 1 3/4 full of water at 15°C. Dish-washing-machine 19 was started up and, at the end of the wash cycle, we got the following results:

- water in cistern 12 : 34°C
- water in storage tank 1 : 38°C
- amount of water drawn off dish-washing-machine 19 : 73.5 litres

- consumption of dish-washing-machine 19 : 1.9 KWh After waiting for the water in cistern 12 to return to 56°C by recovering heat from the water in storage tank 1, 53 litres of water were drawn off and the hot drain water emptied into storage tank 1 which had previously been emptied. Results after drawing off the water:

- water in cistern 12 : 36°C
- water in storage tank 1 : 42°C

To get back to the starting condition, we then waited for the water in cistern 12 to return to 56°C, again by recovering heat from the water in storage tank 1.

During the overall test (7 hours 25 minutes), compressor 11, which was running all the time, consumed 2 KWh making a total consumption figure of 1.9 + 2 = 3.9 KWh for a complete dish-washing cycle and 53 litres of water at 56 °C which was drawn off in the test but could have been used for kitchen purposes. The same performance without the heat recovery device would have required:

3.25 KWh for dish-washing-machine 19 starting with cold water;

53 x (56-15) = 860 = 2.52 KWh to bring the water in cistern 12 up to 56°C;

roughly 0.53 KWh for losses on cistern 12;

making a total consumption figure of:

3.25 + 2.52 + 0.53 = 6.30 KWh.

In other words, to obtain a given performance, we consumed 6.30 KWh using the traditional system and 3.90 KWh using the heat recovery device covered by the present invention, which amounts to a saving of 6.30 - 3.90 KWh or 38% (100 x (2.40 : 6.30) = 38%).

Another important fact to note is that the wash cycle of the dish-washing-machine was reduced.

The advantages of the heat recovery device covered by the present invention will be clear from the description given. In particular, the possibility of saving energy for heating water, of operating equipment at specific times, of reducing the duty cycle time of dish- or clothes-washing-machines, of reducing the power of the heating resistors on such machines, of using the device on standard household appliances with few or even no alterations needed, and, finally, the simple design and low cost of the device itself.

To those skilled in the art it will be clear that numerous alterations can be made to the invention described by way of a non-limiting example without, however, departing from the scope of the present invention.

CLAIMS:

1. Device for recovering heat from domestic water comprising a compressor for compressing refrigerating fluid, a condenser for condensing the refrigerating fluid from the compressor and fitted inside a cistern filled with the water to be heated, an expander for expanding the refrigerating fluid from the condenser, evaporating means for evaporating the refrigerating fluid from the expander, fitted inside a storage tank fed with said domestic water and having a volume sufficient to contain enough water as to yield a noticeable amount of heat to said evaporating means even in the event of small temperature differences between the evaporator and the water in said storage tank, said cistern being furnished with an additional heating resistor to integrate if necessary the heat supplied by said condenser, said storage tank having at least one inlet for said domestic water located in the upper part of the storage tank and at least one outlet for said waters located in the lower part of said storage tank, characterized by the fact that the device for recovering heat is embodied as a household appliance comprising said storage tank (1) and also at least a sink (32) whose outlet flows in said storage tank (1) and said device having over-all dimensions such as to be fitted in a standard room of a flat like the kitchen or the bathroom and being furnished with all necessary connections for being installed without any structural modification to the hydraulic system of the house.

2. Device for recovering heat from domestic water according to claim 1, characterized by the fact that said household device includes also said cistern (12).

3. Device for recovering heat from domestic water according to claim 1, characterized by the fact that said household appliance includes also a dish-washing machine and/or clothes-washing machine whose drain water flows in said storage tank (1).

4. Device for recovering heat from domestic water according to claim 2, characterized by the fact that said household appliance is provided with at least four pipe connections suitable for connecting respectively with an inlet of cold water from the mains to feed said cistern (12) and the sink (32), an inlet of drain water from the outlet of other water-utilizing appliances, such as dish-washing-machine or clothes-washing-machines, an outlet of hot water coming from the cistern (12) and intended for an external user, and an outlet for said water contained in said storage tank (1) to drain it off to the sewer (26).

5. Device for recovering heat from domestic water according to claim 3, characterized by the fact that said household appliance is provided with at least two pipe connections suitable for connecting with respectively an inlet of cold water from the mains to feed said sink (32) and said washing-machine (19), and an outlet for the water contained in said storage tank (1) to drain it off to the sewer (26).

6. Device for recovering heat from domestic water according to claim 2 or 3, characterized by the fact that said device is provided with a drain pump (28) electrically operated and connected to said drain pipe (27) and moreover by the fact that the bottom of said storage tank (1, 101) slopes towards the drain pipe (27) in order to ease the flowing off with the water of solid refuse heavier of the water in which are contained, and apart from said drain pipe (27) the storage tank (1) is provided with an additional drain pipe (25) fitted in the upper part of the storage tank (1), working as an overflow and having such a form as to easy the flowing off with the water also of the lighter refuse.

7.    Device for recovering heat from domestic water according to claim 6, characterized by the fact that said feed pipe (40) for domestic water in-flowing in said storage tank (1) extends to the bottom of the storage tank (1) in order to cause the draining off of water already colder by said additional drain pipe (25) when said domestic water flows in.

8.    Device for recovering heat from domestic water according to claim 2 or 3, characterized by the fact that said device is provided with a drain pump (28) electrically operated and connected to said drain pipe (27), with an electric control unity, with a first thermostat (3) connected to said storage tank (1) to detect the temperature of the water in it contained, with a second thermostat (13) connected to said cistern (12) to detect the temperature of the water in it contained and said control unity purpose is:

-       to activate the compressor (11) when the temperature detected by said second thermostat (13) reaches a first set minimum;

- desactivate the compressor (11) when the temperature detected by said second thermostat (13) reaches a first maximum set by the user or when the temperature detected by said first thermostat (3) reaches a second set minimum, in particular a temperature between 4/6°C;

- to activate the drain pump (28) when the temperature detected by said first thermostat (3) reaches a third set minimum, in particular a temperature between 4/6°C and to desactivate it when the set lower water level in the storage tank (1) is reached.

9. Device for recovering heat from domestic water according to claim 2 or 3, characterized by the fact that a by-pass pipe (33) is provided to allow said domestic water to flow directly in the sewer (26) and which is activated by operating on an apposite valve (34) in case of disconnection of said household appliance.

10. Device for recovering heat from domestic water according to claim 2 or 3, characterized by the fact that said compressor (11) is completely immersed in said cistern (12) in order to keep it in thermic contact with the liquid contained and to yield to it the heat produced by its functioning and that insulating means are provided to guarantee a perfect insulation of the wires carrying to the compressor the power necessary to its functioning.

11. Device for recovering heat from domestic water according to claim 2 or 3, characterized by the fact that it comprises a timer for emptying said storage tank (1) at regular intervals, by means of an electrically operated drain pump (28) connected to said drain pipe (27) and allowing the functioning of said compressor (11) only in set periods of the day.

12. Device for recovering heat from domestic water according to claim 2 or 3, characterized by the fact that when in-coming drain water is hotter than that in the said storage tank (1), the said storage tank (1) is emptied, at least partially, even if the temperature of the water inside has not fallen to the said minimum temperature limit beyond which the storage tank (1) is normally emptied.

13. Device for recovering heat from domestic water according to claim 12 as depending from claim 3, characterized by the fact that when water is conveyed in said washing-machine (19) to be heated, a drain pump (28) electrically operated and connected to said drain pipe (27) empties said storage tank (1) of at least so much water as it is conveyed in the washing-machine, in order to allow the drain disposable hot water at the end of the washing cycle relative to said conveyed water to be accumulated in said storage tank (1) without causing an overflow from an additional drain pipe (25) functioning as an overflow.

14. Device for recovering heat from domestic water according to claim 2 or 3, characterized by the fact that a manual switch is provided to start said additional electric resistor for extra heating and an automatic switch is provided to disconnect automatically the electric resistor for extra heating when the temperature of the water contained in said cistern (12) has reached a set limit.

15. Device for recovering heat from domestic water according to claim 14, characterized by the fact that said pre-set temperature limit is lower than the temperature value pre-set by the user for the maximum temperature to be reached by the water contained in said cistern (12) and that when said electric resistor for extra heating is desactivated said automatic switch starts said compressor (11).

16. Device for recovering heat from domestic water according to claim 8, characterized by the fact that said electric control unity, when the temperature detected by said first thermostat (3) is higher than a pre-set intermediate limit, provides to disconnect said compressor (11) only when the temperature detected by said second thermostat (13) exceeds a second higher limit, which is higher than the first limit pre-set by the user, in order to accumulate as much heat as possible in the water contained in said cistern (12).

17. Device for recovering heat from domestic water according to claim 16, characterized by the fact that said intermediate limit is set at about 30°C, said first higher limit is set at about 45°C, and said second higher limit is set at about 55°C.

18. Device for recovering heat from domestic water according to claim 6, characterized by the fact that refuse mincing blades are provided fitted in front of the inlet of said drain pump (28, 106) and are set in rotation by the same driving shaft which activates the drain pump (28, 106).

19.    Device for recovering heat from domestic water according to claim 2 or 3, characterized by the fact that means (103, 106, 108, 109, 112) are provided for a chemical cleaning of said storage tank (1).

20.    Device for recovering heat from domestic water according to claim 19, characterized by the fact that said means (103, 106, 108, 109, 112) for the chemical cleaning comprise a hole (112) in the wall of said storage tank (1) for pouring in detergent and a spray pipe (108) ending inside the storage tank (1) and provided with spray nozzles (109).

21.    Device for recovering heat from domestic water according to claim 20, characterized by the fact that said means (103, 106, 108, 109, 112) for chemical cleaning comprise a suction pipe (103) for drawing the water from said storage tank (1, 101) to said spray pipe (108), a circulation pump (106) to draw the water in-flowing from said inlet pipe (40, 102) into the storage tank (1), from the bottom of the tank to the spray pipe (108).

22.    Device for recovering heat from domestic water according to claim 21, characterized by the fact that said suction pipe (103) is part of said drain pipe (27, 103), said circulation pump (106) is the same drain pump (28) electrically operated used also for emptying said storage tank (1, 101) of the water already deprived of heat, that a valve (122) is provided to link the suction pipe (103) to a main drain pipe connected to the sewer (26) or to said spray pipe (108) and that a switch is provided for manually actioning the circulation pump.

23. Device for recovering heat from domestic water according to claim 2 or 3, characterized by the fact that said storage tank (1) has a feeble thermic insulation.

24. Device for recovering heat from domestic water according to claim 2 or 3, characterized by the fact that said storage tank (1) is provided with a single inlet pipe (102) for all types of drain water and for water directly from the mains and that in said inlet is fitted a selecting device (119) which, according to the temperature detected by a first temperature sensor (111) placed inside the storage tank (1, 101) and a second temperature sensor (120) placed at the inlet of said selecting device (119), allows into the storage tank (1, 101) only the water having a temperature higher than that contained in the tank.

25. Device for recovering heat from domestic water according to claim 24, characterized by the fact that said selecting device (119) is provided with an inlet pipe (102) partially introduced in the storage tank (1,101), said pipe (102) having an outlet linked to the mains connected to the sewer (26), an overflow hole (118) and a gate valve (119) fitted inside it (and placed) under the overflow hole (118) so that when it is in open position the outflow of said domestic water to the sewer (26) is allowed, but in its close position the flow of said domestic water is prevented through the inlet pipe (102) to make them overflow through the overflow hole (118) into the storage tank (1, 101).

26.    Device for recovering heat from domestic water according to claim 25, characterized by the fact that an electronic control circuit is provided to make the electric driving shaft (121) strongly connected to said gate valve (119), rotate in such a position as to ensure its opening and closing according to the temperature detected by said first (111) and second (120) temperature sensor.

27.    Device for recovering heat from domestic water according to claim 26, characterized by the fact that the torque supplied by said electric driving shaft (121) to said gate valve (119) is so high as to break any solid refuse that might eventually be in said inlet pipe (102) when said gate valve (119) is closed, in particular the torque is of about 20 Kg./cm.

28.    Device for recovering heat from domestic water according to claim 26, characterized by the fact that a cam wheel (130) is provided coupled to said driving shaft (121) and controlling the position of a blade switch (132) connected to a source of power (+V), which corresponds in a first position to the close position of said gate valve (119), and in a second position to the open position of said gate valve (119).

29.    Device for recovering heat from domestic water according to claim 28, characterized by the fact that said electronic control circuit allows said driving shaft to rotate until said cam wheel (130) has turned said blade switch in one of said position, that is, until said gate valve is completely opened or closed.

30.    Device for recovering heat from domestic water according to claim 26, characterized by the fact that said temperature sensors (111, 120) are of the variable resistance type and that said electronic control circuit comprises two voltage resistive dividers (111, 140; 120, 141) in which are respectively placed the two temperature sensors (111, 120), a threshold voltage comparator (139) whose inputs (+,-) are connected respectively to the two voltage resistive dividers (111, 140; 120, 141), and a logic circuit (136, 142, 133, 135, 138) which, according to the output signal of the voltage comparator (139) and to the position of said blade switch (132) controls the functioning of said driving shaft.

FIG. 1

1/5

0088055

# FIG. 2

FIG. 3

# FIG. 4

# FIG. 5

0088055

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | FR-A-2 312 735  (MUNICH) * Whole document * | 1,4,5 | F 24 D  17/00 |
| A | FR-A-2 430 580  (ANVAR) * Whole document * | 1,9 | |
| A | DE-A-3 006 119  (LUKA) * Pages 9,10,11 * | 1,4,5, 6,8 | |
| A | EP-A-0 017 840  (LICENTIA) * Abstract * | 1,13 | |
| A | DE-A-2 625 157  (BOGNER & HUBER) * Figures * | 1,3,13 | |
| A | DE-A-2 801 638  (ETSCHEID) * Whole document * | 1,8 | TECHNICAL FIELDS SEARCHED (Int. Cl. ³) F 24 D |
| A | FR-A-2 391 628  (S.A. DES APPAREILS FRIGORIFIQUES B. LEBRUN) * Whole document * | 1,8,11 ,24 | |
| A | DE-A-2 917 987  (MAIL) * Pages 7,8 * | 1,8 | |
| | ---              -/- | | |

The present search report has been drawn up for all claims

| Place of search THE HAGUE | Date of completion of the search 25-05-1983 | Examiner VAN GESTEL H.M. |
|---|---|---|

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 821 079 (HEAT PUMP & REFRIGERATION LTD.) * Whole document * | 1 | |
| | --- | | |
| A | US-A-4 207 752 (SCHWARZ) * Abstract * | 1 | |
| | ----- | | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 25-05-1983 | VAN GESTEL H.M. |